# EUROPEAN PATENT APPLICATION

(11) **EP 2 614 981 A2**
(43) Date of publication of application: **17.07.2013**
(21) Application number: 13151021.6
(22) Date of filing: 11.01.2013
(51) Int. Cl.: B60L 11/18

(54) **Electric power supply system and controller of vehicle that can supply electric power to outside**

(30) Priority: 13.01.2012 JP 2012004579
(71) Applicant: Hitachi Ltd., Tokyo 100-8280 (JP)
(72) Inventor: Kumano, Kengo, Tokyo, 100-8220 (JP); Shiraischi, Takuya, Tokyo, 100-8220 (JP); Sukegawa, Yoshihiro, Tokyo, 100-8220 (JP); Oryoji, Kazuhiro, Tokyo, 100-8220 (JP)
(74) Representative: MERH-IP Matias Erny Reichl Hoffmann

(57) **Abstract**

Provided is an electric power supply system which includes a plurality of electric power sources and supplies electric power corresponding to demanded electric power. In supplying electric power to the outside from a vehicle which constitutes one of the electric power sources, the electric power supply system realizes generation of power by an engine at high efficiency while maintaining a balance between power income and expenditure. In supplying electric power from the vehicle, an amount of electric power generated by an engine mounted on the vehicle is decided based on information supplied from an external device such as transition over time in an amount of electric power demand including future prediction and transition over time in an amount of electric power which is suppliable from other electric power sources including future prediction.

## Description

### BACKGROUND OF THE INVENTION

### 1. Field of the Invention

The present invention relates to an electric power supply system which makes use of a vehicle on which an engine is mounted as a power source.

### 2. Description of the Related Art

The need for the stable electric power supply and the enhancement of power utilization efficiency (low cost, low emission of carbon dioxide) has been steadily increasing because of the versatility (redundancy) of power sources for household. Among versatile power sources for household, a system which enables the use of electric power of a vehicle in household appliances is becoming more common. There has been proposed a system which uses electric power supplied from a battery of an electric vehicle via an inverter for a household use, or a system where an engine is used as a power generator in an engine mounted vehicle. In the latter case, it is necessary to cover an amount of instantaneous electric power used for household appliances with electric power generated by engine driving (alternator). Accordingly, there has been known a technique where a value of an electric current supplied to the outside from a vehicle, that is, a consumed electric current of an external apparatus is measured, and an amount of electric power generated by an engine (engine rotational speed) is controlled based on the measured value of the electric current (see JP-2001-275400 A) (patent literature 1)). There has been also known a technique where power sources (a battery and an engine power generator) are switched corresponding to a power load (load current) in a hybrid vehicle which can supply electric power to the outside (see JP-2007-008349 A) (patent literature 2)).

### SUMMARY OF THE INVENTION

In the technique described in patent literature 1, it is necessary to change an amount of electric power generated by an engine corresponding to an instantaneous amount of electric power used and hence, a vehicle is driven in a low output region where engine efficiency is poor when the amount of electric power used is small thus giving rise to a drawback that the energy efficiency is low. Further, the technique described in patent literature 1 also has a drawback that the electric power which exceeds the electric power which can be supplied by the engine cannot be used.

In the technique described in patent literature 2, when an amount of electric power used is small, a low-output operation of an engine is suppressed by using battery power. However, when a battery storage amount becomes very small, it is necessary to cover a succeeding power demand with only electric power generated by the engine thus giving rise to a possibility that a power supply amount will become short as described above.

Further, when the vehicle is used as a power generator as described above, it is necessary to operate the engine for a long period in a state where the vehicle is not moving and hence, overheating which is caused by the elevation of a temperature of cooling water, lowering of a catalyst temperature or the like is liable to occur whereby it is necessary to take a countermeasure to avoid such drawbacks.

The present invention has been made in view of the above-mentioned drawbacks, and it is an object of the present invention to provide an electric power supply system which realizes generation of electric power by an engine at high efficiency with a low environmental load by making use of a hybrid vehicle or a household storage device.

To achieve the above-mentioned object, according to one aspect of the present invention, there is provided an electric power supply system which includes a plurality of electric power sources and switches the electric power sources in supplying electric power corresponding to demanded electric power, wherein in performing the supply of electric power from the vehicle, the electric power sources include the supply of electric power from a vehicle, and an amount of electric power generated by an engine mounted on the vehicle is decided based on information supplied from an external device such as transition over time in an amount of electric power demand including future prediction and transition over time in an amount of electric power which is suppliable from other electric power sources including future prediction.

Due to such a constitution, it is possible to realize an operation of the engine (generation of power) at high efficiency while maintaining a balance between power income and expenditure by deciding an amount of generated electric power by taking into account a future amount of electric power demand.

According to another aspect of the electric power supply system of the present invention, the engine is controlled such that an EGR (Exhaust Gas Recirculation) gas amount of the engine in a case where the future increase in the amount of electric power demand is expected becomes larger than an EGR gas amount of the engine in a case where the future increase in the amount of electric power demand is not expected.

Due to such a constitution, in a state where the future increase in an output of the engine during an engine low-output operation is known, a catalyst temperature can be lowered and hence, an EGR gas amount can be increased thus realizing the highly efficient generation of electric power by an engine while maintaining an exhaust function.

According to another aspect of the electric power supply system of the present invention, the engine is controlled such that a cooling water temperature in a case where the transition of the amount of electric power demand at a low level in future is expected becomes higher than a cooling water temperature in a case where the transition of the amount of electric power demand at a low level in future is not expected.

Due to such a constitution, in a state where the future increase in an output of the engine is not expected, the cooling water temperature can be set to a value higher than the cooling water temperature in a normal operation and hence, a heat loss can be reduced or the combustion at the time of the increase in the EGR gas amount can be made stable thus leading to the realization of the highly efficient generation of electric power by the engine while avoiding overheating or misfiring.

According to another aspect of the electric power supply system of the present invention, in supplying electric power from the vehicle, electric power is generated using a household gas fuel instead of using a usual fuel such as gasoline or light oil as a fuel for the vehicle.

Due to such a constitution, electric power can be generated by the engine using the current infrastructure without impairing a moving function which is an original function of the vehicle.

According to another aspect of the electric power supply system of the present invention, the electric power supply system includes a plurality of electric power usage modes, and switches, when an electric power demand exceeds a limit amount of suppliable electric power of the electric power source, the electric power usage modes corresponding to the limit amount of suppliable electric power.

Due to such a constitution, even under a situation where the electric power demand is large and exceeds a limit amount of suppliable electric power, by restricting an amount of electric power used and by supplying electric power to electric devices in order of prioritized need, it is possible to prevent the system-down thus realizing a highly reliable electric power supply system.

According to the present invention, even under a situation where an amount of electric power used is largely changed in supplying electric power to a household appliance from the vehicle, by optimizing an engine controlled,variable by taking into account a future electric power demand, the highly efficient generation of electric power by the engine can be realized while avoiding worsening of the exhaust performance and the overheating of the engine.

### BRIEF DESCRIPTION OF THE DRAWINGS

Fig. 1 is a system constitutional view showing the constitution of an electric power supply system according to a first embodiment of the present invention, wherein the system is applied to a household power source;
Fig. 2 is a system constitutional view of the electric power supply system according to the first embodiment of the present invention, wherein a vehicle is used as an electric power supply source;
Fig. 3 is a system block diagram showing the constitution of an ECU 8 according to the first embodiment of the present invention;
Fig. 4 is a flowchart showing the contents of a control of a vehicle-use engine performed by the electric power supply system according to the first embodiment of the present invention;
Fig. 5 is a timing chart of an engine power generation control performed by the electric power supply system according to the first embodiment of the present invention;
Fig. 6 is a constitutional view of a vehicle-use engine in an electric power supply system according to a second embodiment of the present invention;
Fig. 7 is a flowchart of an engine fuel control performed by the electric power supply system according to the second embodiment of the present invention;
Fig. 8 is a constitutional view of a vehicle-use engine in an electric power supply system according to a third embodiment of the present invention;
Fig. 9 is a flowchart of an EGR (Exhaust Gas Recirculation) control performed by the electric power supply system according to the third embodiment of the present invention;
Fig. 10 is a timing chart of the EGR control performed by the electric power supply system according to the third embodiment of the present invention;
Fig. 11 is a graph showing the relationship between maximum supply electric power and an electric power usage mode in an electric power supply system according to a fourth embodiment of the present invention;
Fig. 12 is a flowchart of an electric power use control performed by the electric power supply system according to the fourth embodiment of the present invention;
Fig. 13 is a constitutional view of a system of a vehicle which is an electric power supply source and an electric vehicle which is the charging destination in an electric power supply system according to a fifth embodiment of the present invention;
Fig. 14 is a flowchart of a cooling water temperature control and an EGR control performed by the electric power supply system according to the fifth embodiment of the present invention; and
Fig. 15 is a timing chart of the cooling water temperature control and the EGR control performed by the electric power supply system according to the fifth embodiment of the present invention.

### DETAILED DESCRIPTION

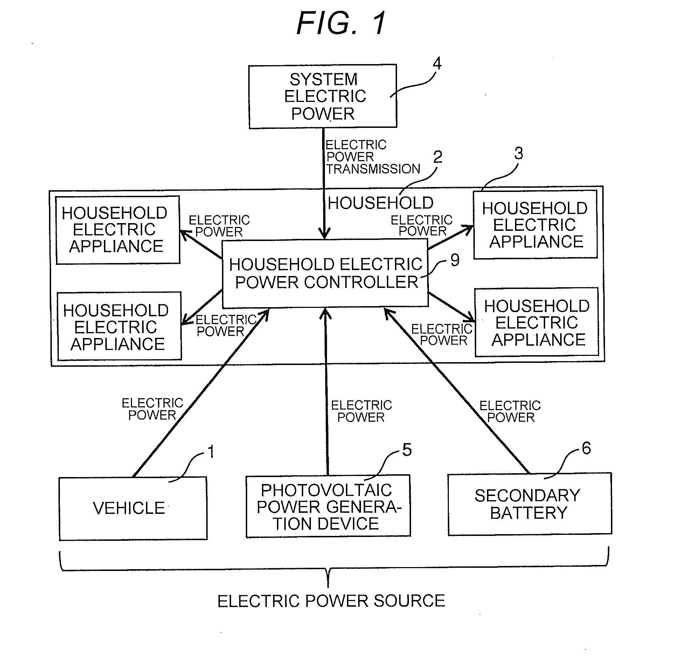

Hereinafter, the constitution and the manner of operation of an electric power supply system according to a first embodiment of the present invention are explained in conjunction with Fig. 1 to Fig. 5.

Firstly, using Fig. 1, the constitution where the electric power supply system according to this embodiment is applied to a household power source is explained.

Fig. 1 is a system constitutional view showing the constitution of the electric power supply system according to the first embodiment of the present invention, wherein the system is applied to the household power source.

For supplying electric power to household electric appliances 3 used in a household 2, the electric power supply system includes a vehicle 1, a photovoltaic power generation device 5 and a secondary battery 6 as electric power sources in addition to system electric power 4 supplied from an electric power company. Accordingly, even in a state where the system electric power is interrupted due to a blackout or the like, the electric power which is used by the household electric appliances can be supplied using the above-mentioned electric power sources.

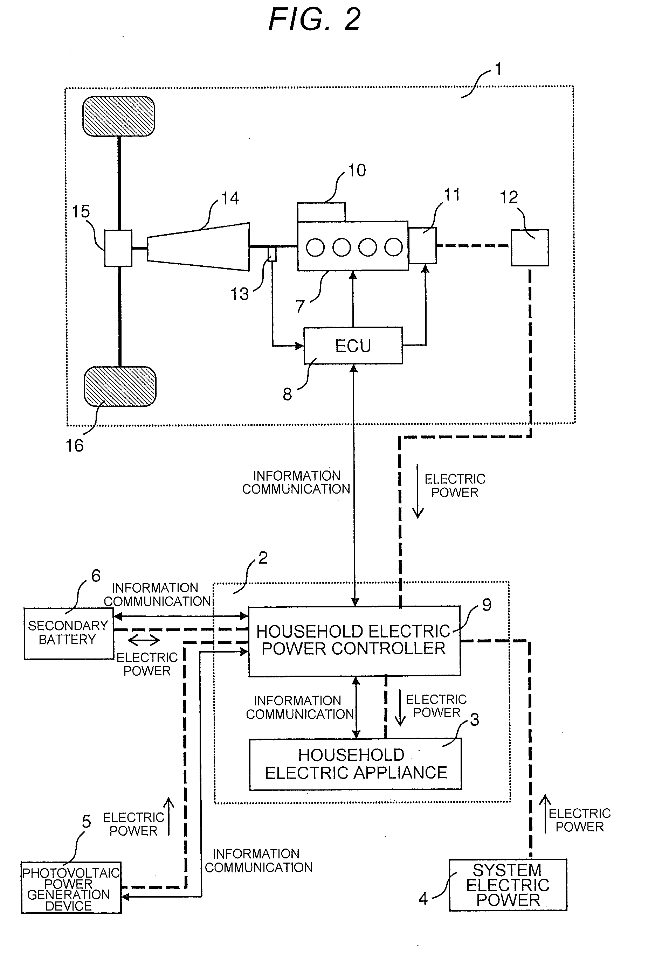

Fig. 2 is a system constitutional view of the electric power supply system according to the first embodiment of the present invention, wherein the vehicle is used as an electric power supply source.

The vehicle 1 includes an engine 7 as a power source, wherein the engine 7 is a vehicle-use 4-cylinder gasoline engine in which the spark ignition combustion is performed. The engine 7 includes a starter 10 for starting the engine and an alternator 11 which converts power of the engine into electric power. A crank angle sensor 13 for detecting a rotational angle of the engine 7 is provided to a crankshaft of the engine 7. A transmission 14 is mounted on the crankshaft of the engine 7, and the transmission 14 is connected to wheels 16 by way of a speed reduction gear 15.

A controlled variable of the engine is controlled by an electronic control unit (ECU) 8. When electric power is supplied to the household 2 from the vehicle 1, the ECU 8 controls the engine 7 based on a signal (engine rotational speed) obtained by the crank angle sensor 13 and electric power demand information transmitted from a household electric power controller 9. The household electric power controller 9 performs information communication with a plurality of existing household electric appliances 3, and predicts a future amount of electric power demand in a household using past electric power demand learned values, timer reservation information on respective electric appliances and the like. The predicted electric power demand is transmitted to the ECU 8. Residual amount information on the secondary battery 6 is also transmitted to the ECU 8 via the household electric power controller 9.

Power of the engine 7 is converted into electric power by the alternator 11, and the electric power is supplied to the household via an inverter 12. The supplied electric power is used by the household electric appliances 3 together with electric power supplied from other electric power sources (system electric power 4, the photovoltaic power generation device 5, and the secondary battery 6). When an amount of electric power supplied exceeds an amount of electric power used by the electronic appliances, surplus electric power is stored in the secondary battery 6.

In the drawing, a power line and an information communication line are described as separate lines. However, the electric power supply system of this embodiment assumes power line communications where information communication is performed using the power line. Further, information communication may be performed by radio using a smartphone or the like.

In this embodiment, the electric power supply system adopts the system constitution where the vehicle which includes only the engine as the power source is used as the electric power source. However, the system constitution is not limited to such a constitution. It is sufficient that a vehicle which mounts an engine thereon is used as an electric power source as exemplified by a hybrid vehicle which uses both an engine and a motor or the like, for example.

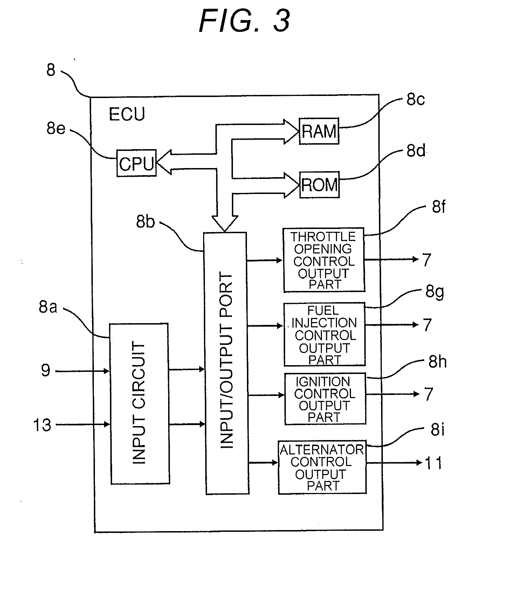

Next, the constitution of the ECU 8 according to this embodiment is explained in conjunction with Fig. 3.

Fig. 3 is a system block diagram showing the constitution of the ECU 8 according to the first embodiment of the present invention.

An output signal of the crank angle sensor 13 and electric power demand information from the household electric power controller 9 are inputted into an input circuit 8a of the ECU 8. However, input signals are not limited to these signals. The respective input signals are transmitted to an input port in the inside of an input/output port 8b. The signals transmitted to the input/output port 8b are stored in a RAM 8c, and are subjected to arithmetic operation processing in a CPU 8e. A control program which describes the contents of arithmetic operation processing is written in a ROM 8d in advance.

Values indicative of operation amounts of the respective devices calculated in accordance with the control program are stored in the RAM 8c and, thereafter, are transmitted to an output port in the inside of the input/output port 8b, and are transmitted to the respective devices via respective output parts. In the case of this embodiment, the output parts are constituted of a throttle opening control output part 8f, a fuel injection control output part 8g, an ignition control output part 8h, and an alternator control output part 8i. The respective circuits are connected to the engine 7 and the alternator 11 respectively. The ECU 8 controls an amount of electric power generated by the alternator 11 by adjusting an output of the engine 7 based on an electric power demand predicted value from the household thus realizing the efficient generation of electric power by the engine while maintaining a balance between power income and expenditure.

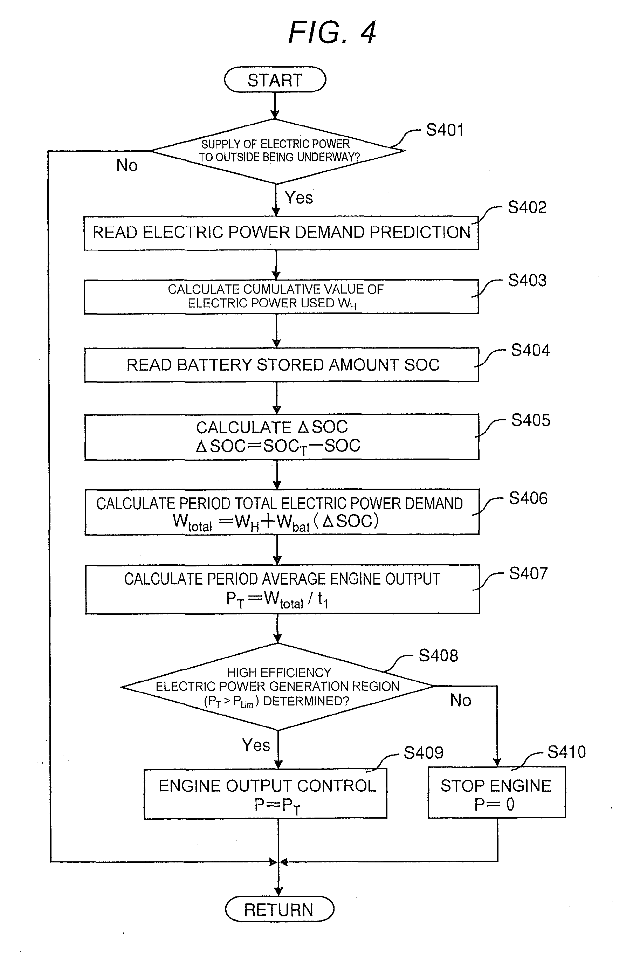

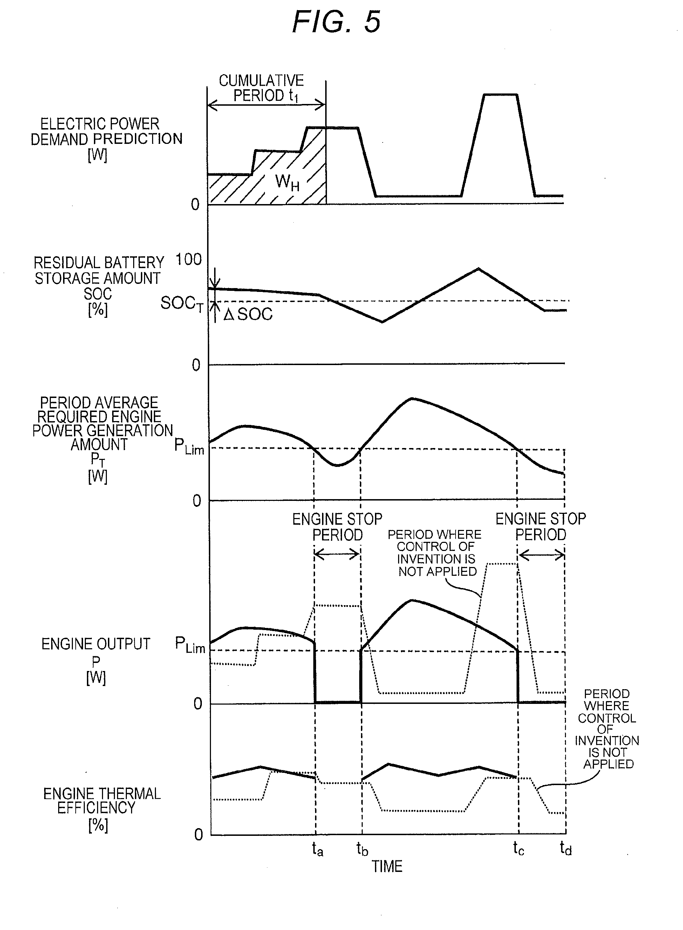

Next, the basic operation of the engine (electric power generator) in the electric power supply system according to this embodiment is explained in conjunction with Fig. 4 and Fig. 5.

Fig. 4 is a flowchart showing the contents of a control of the vehicle-use engine in the electric power supply system according to the first embodiment of the present invention. The contents of the control shown in Fig. 4 are repeatedly executed by the ECU 8 at predetermined cycles.

In step S401, the ECU 8 determines whether or not electric power is supplied to the outside based on a connection state of the power line or the like. When it is determined that the supply of the electric power to the outside is not underway, the ECU 8 finishes the control without executing a series of engine control. When it is determined that the supply of the electric power to the outside is underway in step S401, the processing advances to step S402 where the ECU 8 reads a predicted value of an amount of electric power used which is transmitted from the household electric power controller 9. Thereafter, in step S403, the ECU 8 calculates a cumulative value of an amount of electric power used W_{H} corresponding to a fixed period t₁ as counted from a present time. Thereafter, in step S404, the ECU 8 reads a present battery stored amount SOC supplied from the household electric power controller 9 and, thereafter, the processing advances to step S405 where the ECU 8 calculates a storage amount surplus/shortage amount ΔSOC based on a target battery storage amount SOC_{T} and the present battery storage amount SOC (ΔSOC=SOC_{T}-SOC). The target battery storage amount SOC_{T} is stored in the ROM 8d in the inside of the ECU 8 in advance, and is set to 50%, for example. Thereafter, in step S406, the ECU 8 calculates a total electric power demand amount Wₜₒₜₐₗ corresponding to a fixed period t₁ as counted from a present time based on a cumulative value of an electric power used W_{H} and the storage amount surplus/shortage amount ΔSOC (Wₜₒₜₐₗ= W_{H}+W_{bat}(ΔSOC)). Here, W_{bat} is a surplus/shortage amount of storage energy, and is calculated based on ΔSOC (W_{bat}=ΔSOC×battery capacitancexbattery voltage). Thereafter, in step S407, the ECU 8 calculates a period average engine output P_{T} (P_{T}= Wₜₒₜₐₗ/t₁). Thereafter, in step S408, the ECU 8 determines whether or not the period average engine output P_{T} is larger than an output lower limit value P_{Lim} at which the engine can be operated at fixed efficiency or more. The output lower limit value P_{Lim} is stored in the ROM 8d in the inside of the ECU 8 in advance. When it is determined that the period average engine output P_{T} is larger than the output lower limit value P_{Lim} in step S408, the processing advances to step S409 where a control is executed so as to make an output P of the engine become the period average engine output P_{T} so that a series of controls is finished. When it is determined that the period average engine output P_{T} is smaller than the output lower limit value P_{Lim} in step S408, the processing advances to step S410 where an operation of the engine is stopped so as to make the output P of the engine become 0 so that a series of controls is finished. Due to such a control, an operation of the engine at the output lower limit value P_{Lim} or less is avoided so that the engine operation at high power generation efficiency can be realized.

Fig. 5 is a timing chart of an engine power generation control in the electric power supply system according to the first embodiment of the present invention. In the drawing, from the top to the bottom, the electric power demand prediction, a residual battery storage amount SOC, a period average required engine power generation amount P_{T}, an engine output P and engine thermal efficiency are described. In timing charts of the engine output P and the engine thermal efficiency, for a comparison purpose, timing charts of the engine output P and the engine thermal efficiency in a case where an engine power generation control is performed corresponding to a present electric power demand without performing the control of the present invention are described by dotted lines together with the timing charts obtained by the present invention.

When the power generation control starts, the ECU 8 calculates an amount of electric power used W_{H} (a hatched portion in the drawing) corresponding to a fixed period t₁ as counted from a present time based on the electric power demand prediction transmitted from the household electric power controller 9. A period average required engine power generation amount P_{T} is calculated based on an amount of electric power used W_{H} and the storage amount surplus/shortage amount ΔSOC. At the beginning of the power generation control, the period average required engine power generation amount P_{T} is larger than the output lower limit value P_{Lim} and hence, an engine output P is controlled so as to become the period average required engine power generation amount P_{T}. At a point of time that the time becomes tₐ, the calculated period average required engine power generation amount P_{T} becomes smaller than the output lower limit value P_{Lim} and hence, the engine is stopped so that the electric power demand is covered with only the battery electric power. When the time becomes t_{b}, the period average required engine power generation amount P_{T} exceeds the output lower limit value P_{Lim} again and hence, the engine is restarted and a control is performed so as to make the engine output P become the period average required engine power generation amount P_{T}. In the same manner, the engine is stopped at a point of time t_{c}, and the engine is restarted at a point of time t_{d}.

To compare the case where the control of the present invention is performed and the case where the control of the present invention is not performed with respect to the engine output P, it is understood that by performing the control of the present invention, the fluctuation of the output of the engine becomes small or an output range of the engine becomes narrow. As a result, by not using a low output side and a high output side where the engine thermal efficiency is low, the engine thermal efficiency can be enhanced thus realizing the power generation at high efficiency.

As has been explained heretofore, according to this embodiment, by controlling the engine power generation amount based on the prediction of an amount of electric power used in a household in the engine electric power control, an engine output control width can be limited while maintaining the balance between power income and expenditure thus realizing power generation at high efficiency.

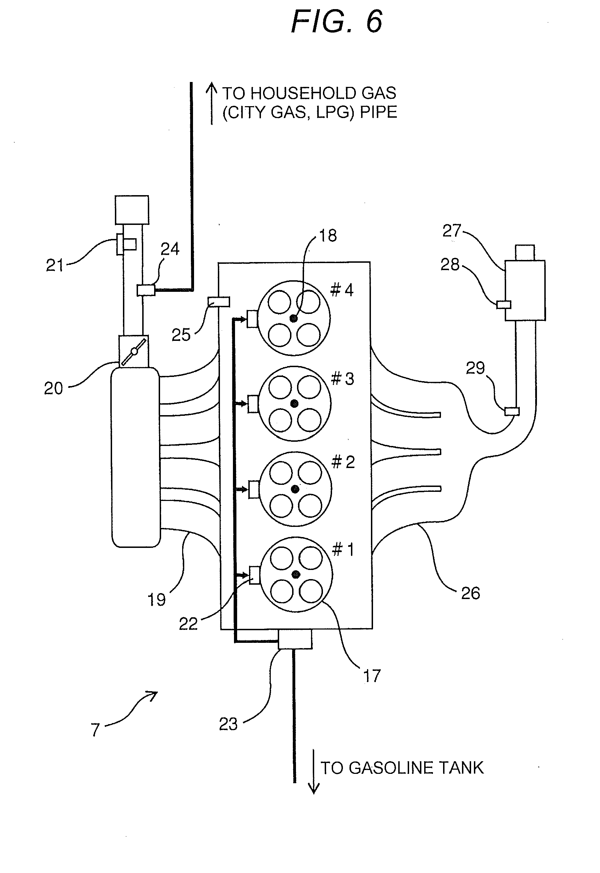

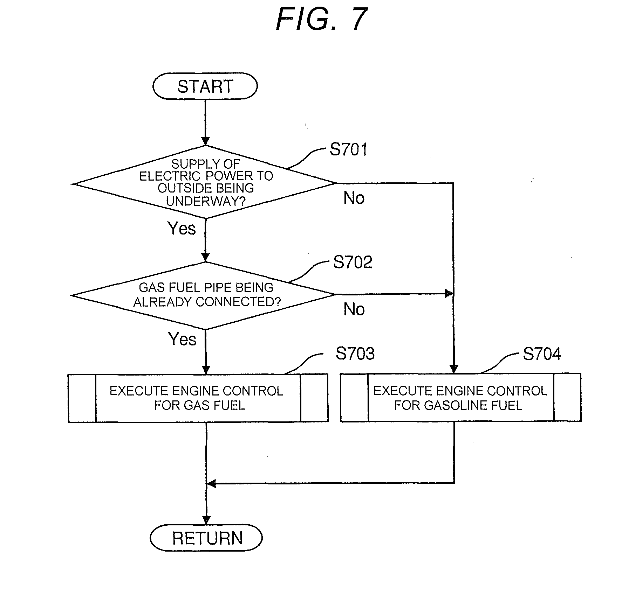

Hereinafter, the constitution and the manner of operation of an electric power supply system according to a second embodiment of the present invention are explained in conjunction with Fig. 6 and Fig. 7.

The electric power supply system according to the second embodiment of the present invention has the substantially same constitution as the electric power supply system shown in Fig. 1 with respect to a point that the system is applied to the household power source.

The electric power supply system according to the second embodiment of the present invention wherein the vehicle is used as the electric power supply source is substantially equal to the system shown in Fig. 2.

A system block diagram showing the constitution of an ECU 8 in the second embodiment of the present invention is substantially equal to the system block diagram shown in Fig. 3.

A portion relating to an engine output control in an engine power generation control performed by the electric power supply system in the second embodiment is substantially equal to the corresponding portion shown in Fig. 4 and Fig. 5.

This embodiment of the present invention is characterized by performing a fuel switching control with respect to an engine power generation control performed by the electric power supply system according to the second embodiment of the present invention.

Fig. 6 is a constitutional view of a vehicle-use engine in the electric power supply system according to the second embodiment of the present invention.

The engine 7 is a vehicle-use 4-cylinder gasoline engine in which the spark ignition combustion is performed. An air flow sensor 21 which measures an intake air amount, and an electronic control throttle 20 which adjusts an intake pipe pressure are mounted on intake pipes 19 at respective suitable positions. In the engine 7, an ignition plug 18 which feeds ignition energy is provided in combustion chambers 17 of respective cylinders, and a cooling water temperature sensor 25 which measures a temperature of cooling water in the engine is mounted on a cylinder head at a suitable position.

A gasoline fuel injection device 22 for injecting gasoline which becomes a fuel is arranged in the inside of the respective combustion chambers 17, and a high-pressure fuel pump 23 for supplying a high-pressure fuel to the gasoline fuel injection devices 22 is connected to the gasoline fuel injection devices 22 by way of a fuel pipe. The high-pressure fuel pump 23 is connected to a gasoline tank by a fuel pipe. A gas fuel supply device 24 which controls a supply amount of a gas fuel is mounted in the inside of the intake pipe 19. The gas fuel supply device 24 is connectable to a household gas source (city gas, LPG or the like) through a gas-use pipe.

A three-way catalyst 27 which purifies an exhaust gas, a catalyst temperature sensor 28 which measures a temperature of the three-way catalyst 27 and an air-fuel ratio sensor 29 which is a type of an air-fuel ratio detector and detects an air-fuel ratio of the exhaust gas upstream of the three-way catalyst 27 are mounted on an exhaust pipe 26 at suitable positions.

Due to the above-mentioned constitution, engine driving which uses gasoline and engine driving which uses a gas fuel can be used in a switchable manner.

Fig. 7 is a flowchart of an engine fuel control in the electric power supply system according to the second embodiment of the present invention. The contents of a control shown in Fig. 7 are repeatedly executed by an ECU 8 at predetermined cycles.

In step S701, the ECU 8 determines whether or not electric power is supplied to the outside based on a connection state of a power line or the like. When it is determined that the supply of the electric power to the outside is underway, the processing advances to step S702 where the ECU 8 determines whether or not the pipe for a gas fuel in the vehicle is connected to the household gas fuel pipe. Whether or not the pipe is connected is determined based on a pressure in the pipe for a gas fuel or using an electronic switch mounted on a connector portion for pipe connection. When it is determined that the pipe is connected, the processing advances to step S703 where an engine control for a gas fuel is executed so that a series of controls is finished. To be more specific, control parameters such as a fuel supply amount, an ignition timing, and throttle opening suitable for a gas fuel are set corresponding to a desired engine output. These parameter set values for a gas fuel are stored in a ROM 8d in the inside of an ECU 8 in advance.

When it is determined that the supply of the electric power to the outside is not underway in step S701 and it is determined that the pipe for a gas is not connected in step S702, the processing advances to step S704 where an engine control for a gasoline fuel is executed so that a series of controls is finished. To be more specific, control parameters such as a fuel injection amount, an ignition timing and throttle opening suitable for a gasoline fuel are set corresponding to a desired engine output. These parameter set values for a gasoline fuel are stored in the ROM 8d in the inside of the ECU 8 in advance.

As has been explained above, according to this embodiment, when electric power is supplied to the outside from a vehicle, the generation of electric power by the engine is preferentially carried out using a household gas fuel. Accordingly, the generation of electric power can be continued by making use of an existing facility (infrastructure) without impairing a function of a vehicle which the vehicle possesses as a moving means (without using gasoline which is a fuel for moving).

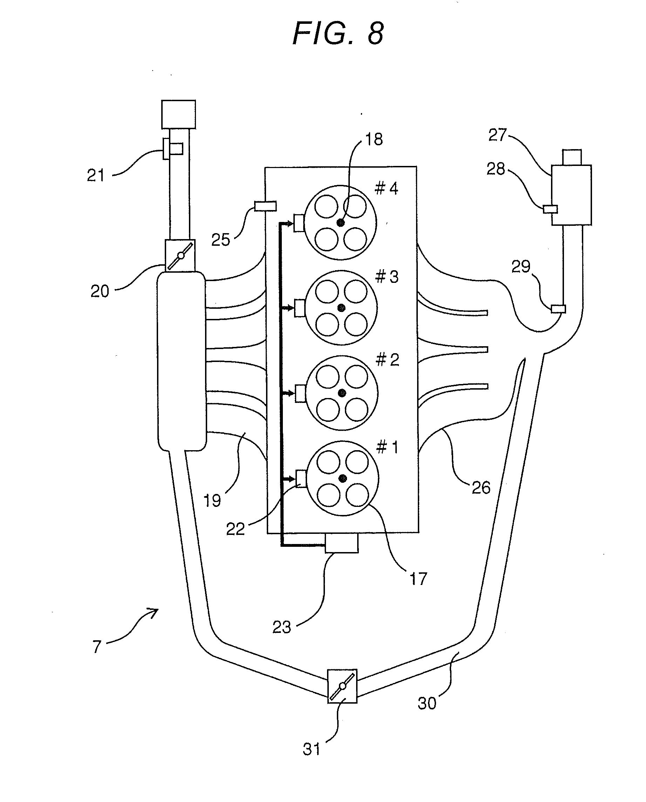

Hereinafter, the constitution and the manner of operation of an electric power supply system according to a third embodiment of the present invention are explained in conjunction with Fig. 8 to Fig. 10.

The electric power supply system according to the third embodiment of the present invention has the substantially same constitution as the electric power supply system shown in Fig. 1 with respect to a point that the system is applied to the household power source.

The electric power supply system according to the third embodiment of the present invention wherein the vehicle is used as the electric power supply source is substantially equal to the system shown in Fig. 2.

A system block diagram showing the constitution of an ECU 8 in the third embodiment of the present invention is substantially equal to the system block diagram shown in Fig. 3.

A portion relating to an engine output control in an engine power generation control performed by the electric power supply system in the third embodiment is substantially equal to the corresponding portion shown in Fig. 4 and Fig. 5.

This embodiment of the present invention is characterized by performing an EGR (Exhaust Gas Recirculation) control based on information on prediction of an amount of electric power used with respect to an engine power generation control performed by the electric power supply system according to the third embodiment of the present invention.

Fig. 8 is a constitutional view of a vehicle-use engine in an electric power supply system according to the third embodiment of the present invention.

In this embodiment, in addition to the engine constitution of the second embodiment shown in Fig. 6, an EGR pipe 30 is provided between an exhaust pipe and an intake pipe, and an EGR valve 31 for controlling an amount of exhaust gas flown into the intake pipe is arranged in a passage of the EGR pipe 30.

Due to such a constitution, an amount of EGR gas introduced into a combustion chamber can be controlled. While the introduction of an EGR gas is effective for reducing a pumping loss and can realize the reduction of fuel consumption, the introduction of the EGR gas has a possibility of causing the deterioration of an exhaust due to lowering of a catalyst temperature during an engine low-output operation.

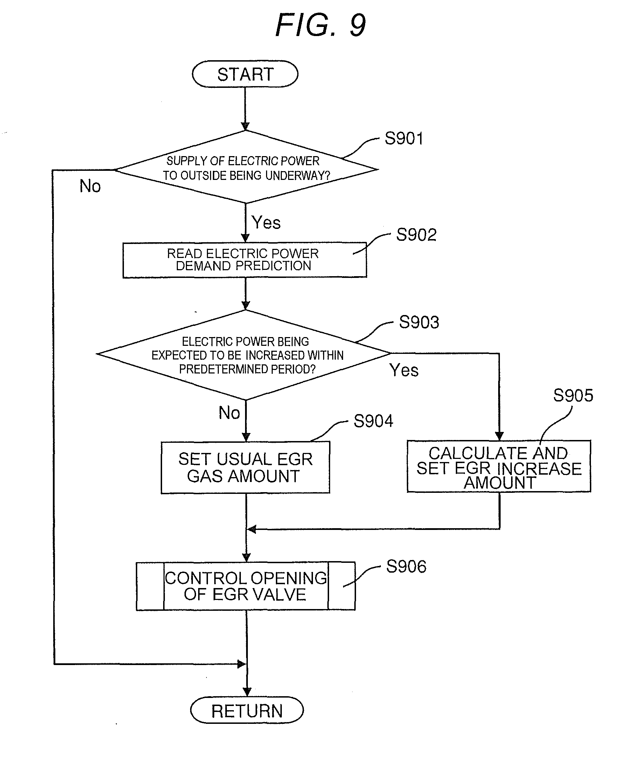

Fig. 9 is a flowchart of an engine EGR gas amount control performed by the electric power supply system according to a third embodiment of the present invention. The contents of a control shown in Fig. 9 are repeatedly executed by the ECU 8 at predetermined cycles.

In step S901, the ECU 8 determines whether or not electric power is supplied to the outside based on a connection state of a power line or the like. When it is determined that the supply of electric power to the outside is underway, the processing advances to step S902 where the ECU 8 reads a prediction value of an amount of electric power used transmitted from a household electric power controller 9. Thereafter, the processing advances to step S903 where the ECU 8 determines whether or not an amount of electric power used is expected to be increased exceeding a present amount within a fixed period as counted from the present time. When it is determined that the amount of electric power used is not expected to be increased, the processing advances to step S904 where the usual EGR gas amount setting is reflected and, thereafter, the processing advances to step S906. Here, the usual EGR gas amount set value means an EGR gas amount set value when the same engine torque or the same engine rotational speed is realized in a usual operation mode where a vehicle is used for traveling as this electric power usage mode, and the usual EGR gas amount set value is stored in a ROM 8d in the inside of the ECU 8 as a function of an engine output in advance. When it is determined that the amount of electric power used is expected to be increased exceeding the present amount within the fixed period as counted from the present time in step S903, the processing advances to step S905 where the ECU 8 calculates an EGR increase amount to be added to the usual EGR gas amount set value. Here, the EGR increase amount to be added is calculated based on a timing at which an electric power is to be increased or an increase amount of electric power. To be more specific, the EGR increase amount to be added is calculated such that the EGR gas amount becomes the largest within a range where a catalyst temperature is not lowered below a lower-limit catalyst temperature at which a catalyst can maintain an exhaust gas purifying performance. After a calculation result is reflected on the EGR gas amount setting, the processing advances to step S906. Opening of the EGR valve is controlled based on the set EGR gas amount in step S906 and, thereafter, a series of controls is finished. The relationship between the EGR gas amount and the opening of the EGR valve is stored in the ROM 8d in the inside of the ECU 8 in advance. By performing the control of this embodiment, the engine power generation efficiency can be enhanced by increasing the EGR gas amount as large as possible even in an engine low-output operation while avoiding lowering of an exhaust gas purifying performance caused by lowering of a catalyst temperature.

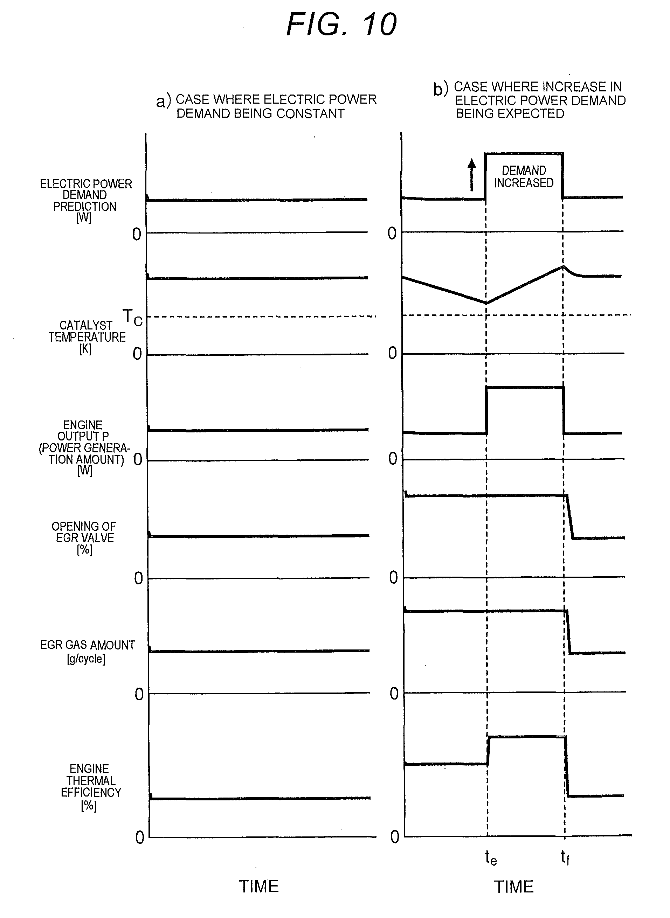

Fig. 10 is a timing chart of the EGR control in the electric power supply system according to the third embodiment of the present invention. In the drawing, from the top to the bottom, the electric power demand prediction, a catalyst temperature, an engine output P, opening of an EGR valve, an EGR gas amount and engine thermal efficiency are described.

In the drawing, a) is a timing chart in a case where a predicted electric power demand is constant.

Since it is necessary to hold a catalyst temperature at a lower limit temperature T_{c} or above at which an exhaust gas purifying performance of a catalyst can be maintained, an EGR gas amount is limited to a range where the catalyst temperature can be held at a fixed value. In the drawing, b) is a timing chart in a case where the increase in an electric power demand is expected. In the same manner as described above, although it is necessary to hold the catalyst temperature at a lower limit temperature T_{c} or above at which an exhaust gas purifying performance of a catalyst can be maintained, it is known in advance that a vehicle enters an operation condition where an electric power demand is increased and the catalyst temperature can be easily elevated in future (at a point of time tₑ) and hence, it is sufficient to control a present EGR gas amount within a range where the catalyst temperature is not lowered below T_{c} at the point of time tₑ. As a result, compared to the case a), an EGR gas amount can be increased so that efficiency of the engine can be enhanced. Thereafter, the electric power demand is increased at the point of time tₑ and is decreased to an original demand at a point of time t_{f}. The future increase in an electric power demand is not expected at this point of time and hence, in the same manner as the case a), an EGR gas amount is limited within a range where a catalyst temperature can be held at a fixed value.

As has been explained above, according to this embodiment, an EGR gas can be introduced into a combustion chamber of the engine at maximum while suppressing the deterioration of an exhaust gas caused by lowering of a catalyst temperature and hence, the generation of electric power by the engine at high efficiency can be realized also during a low-output operation.

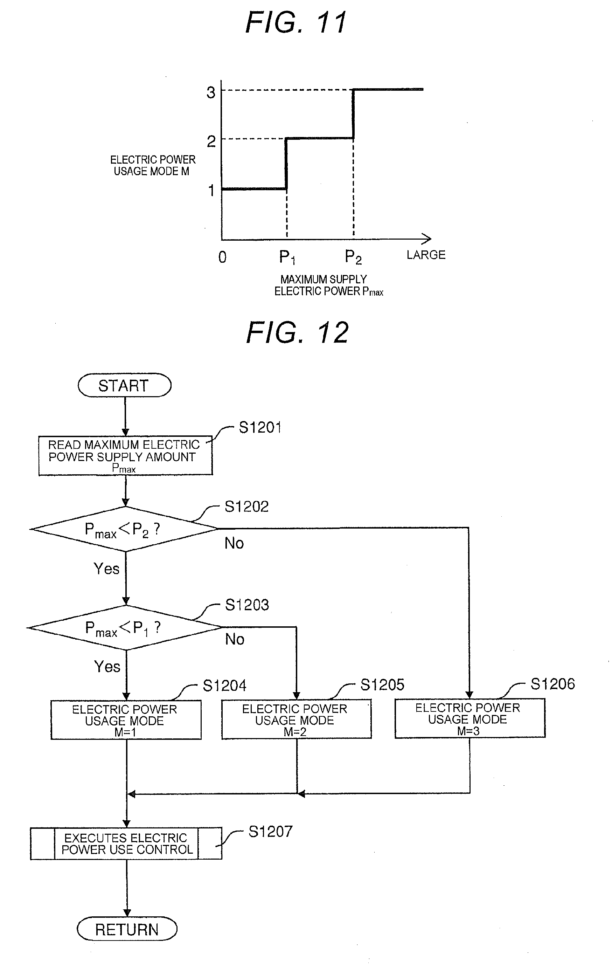

Hereinafter, the constitution and the manner of operation of an electric power supply system according to a fourth embodiment of the present invention are explained in conjunction with Fig. 11 and Fig. 12.

The electric power supply system according to the fourth embodiment of the present invention has the substantially same constitution as the electric power supply system shown in Fig. 1 with respect to a point that the system is applied to the household power source.

This embodiment of the present invention is characterized by performing a control of an amount of electric power used corresponding to a maximum supply electric power amount with respect to a household electric power control performed by an electric power supply system.

Fig. 11 is a graph showing maximum supply electric power and an electric power usage mode in the electric power supply system according to the fourth embodiment of the present invention.

The maximum supply electric power Pₘₐₓ is the total maximum electric power which can be supplied at a present point of time from a vehicle, a secondary battery, a photovoltaic power generator or the like which constitutes an electric power source. The electric power usage mode M is a mode which def ines a household electric power use range. When the mode M is 1, the electric power usage mode M becomes an energy basic electric power mode where the supply of electric power only to the electric power supply system (household electric power controller 9) per se is allowed. When the mode M is 2, the electric power usage mode M becomes a local infrastructure electric power mode where in addition to the supply of electric power to the electric power supply system per se, the use of electric power associated with the infrastructure (for example, electric power for illumination apparatuses, cooking apparatuses or the like) is allowed. When the mode M is 3, the electric power usage mode M becomes a life environment improvement mode where in addition to the supply of electric power to the electric power supply system per se and the supply of electric power associated with the infrastructure, the use of the supply of electric power associated with the life environment improvement (for example, electric power for air conditioning, heating water in a bath or the like) is allowed. The maximum amount of electric power used in these electric power usage modes M is increased in order of the energy basic electric power mode, the local infrastructure electric power mode and the life environment improvement mode.

The household electric power controller 9, when the maximum supply electric power is sufficiently large compared to the electric power to be used (≥P₂), sets the electric power usage mode M to 3 (M=3) so that all household appliances can be used. When the maximum supply electric power is decreased so that a state where not all household appliances can be used arises (<P₂), the household electric power controller 9 switches the electric power usage mode M to 2 (M=2) so that the use of electric power indispensable for life such as illumination and cooking is secured. When the maximum supply electric power is further decreased so that a state where even electric power for illumination, cooking or the like cannot be supplied arises (<P₁), the household electric power controller 9 switches the electric power usage mode M to 1 (M=1) so that the supply of electric power is limited only to the electric power supply system (household electric power controller 9) per se thus avoiding the system-down of the electric power supply system.

Fig. 12 is a flowchart of a control of an amount of electric power used in the electric power supply system according to the fourth embodiment of the present invention. The contents of a control shown in Fig. 12 are repeatedly executed by the household electric power controller 9 at predetermined cycles.

In step S1201, the household electric power controller 9 performs communication with an electric power source connected to the household electric power controller 9, and reads the present maximum electric power supply amount Pₘₐₓ. Next, in step S1202, the household electric power controller 9 determines whether or not the maximum electric power supply amount Pₘₐₓ is smaller than electric power P₂ sufficient for covering household electric power. When it is determined that the maximum electric power supply amount Pₘₐₓ is larger than the electric power P₂, in step S1206, the household electric power controller 9 sets the electric power usage mode M to 3, and executes an electric power use control in step S1207. In this case, to be more specific, all types of electric power supplies are allowed. That is, the household electric power controller 9 allows, in addition to the supply of electric power to the electric power supply system per se and the supply of electric power associated with the local infrastructure, the supply of electric power associated with the life environment improvement. When it is determined that the maximum electric power supply amount Pₘₐₓ is smaller than the electric power P₂ in step S1202, the household electric power controller 9 determines whether or not the maximum electric power supply amount Pₘₐₓ is smaller than the electric power P₁ sufficient for covering electric power for illumination and cooking appliances in step S1203. When it is determined that the maximum electric power supply amount Pₘₐₓ is larger than the electric power P₁, the household electric power controller 9 sets the electric power usage mode M to 2 in step S1205, and executes an electric power use control in step S1207. In this case, to be more specific, the household electric power controller 9 allows the supply of electric power to the electric power supply system per se and the supply of electric power associated with the local infrastructure. When it is determined that the maximum electric power supply amount Pₘₐₓ is smaller than the electric power P₁ in step S1203, the household electric power controller 9 sets the electric power usage mode M to 1 in step S1204, and executes an electric power use control in step S1207. In this case, to be more specific, the household electric power controller 9 allows only the supply of electric power to the electric power supply system per se.

As has been explained above, according to this embodiment, even when the supply of electric power is short, by performing the restriction on the use of electric power by taking into account the priority of use corresponding to the maximum electric power supply amount, electric power can be effectively utilized while avoiding the system-down.

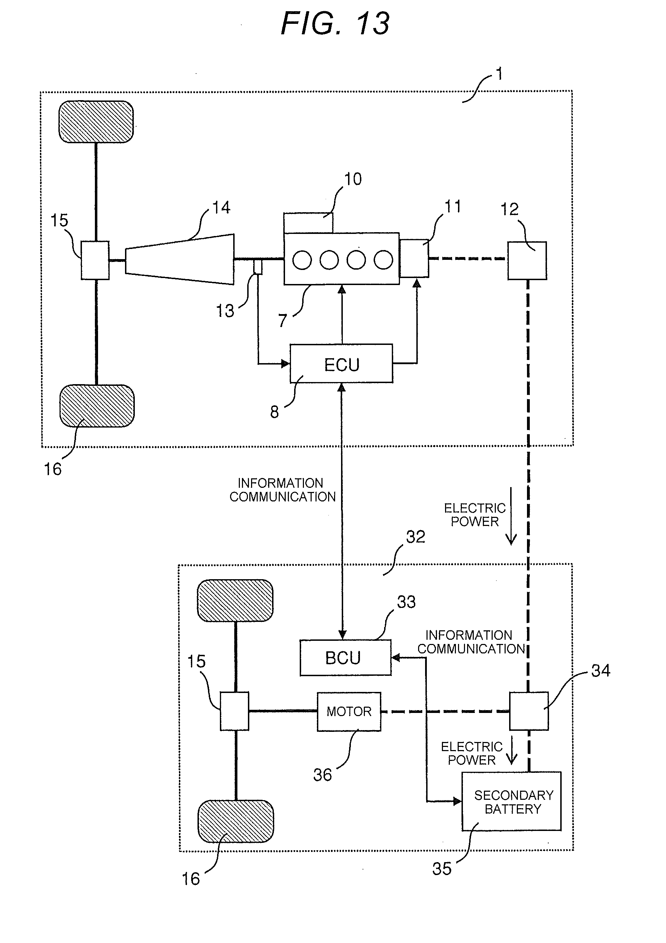

Hereinafter, the constitution and the manner of operation of an electric power supply system according to a fifth embodiment of the present invention are explained in conjunction with Fig. 13 to Fig. 15.

Fig. 13 shows the constitution of an electric power supply system according to the fifth embodiment of the present invention, wherein the system is used for charging an electric vehicle. The constitution of the vehicle 1 which constitutes an electric power source is substantially equal to the constitution of the vehicle 1 shown in Fig. 2. The vehicle 1 supplies electric power generated by an engine 7 and a generator (alternator) 11 to an electric vehicle 32 via an inverter 12. Electric power supplied from the vehicle 1 is stored in the secondary battery 35 of the electric vehicle 32 via an inverter 34 for an electric vehicle. The electric vehicle 32 includes a control unit (BCU) 33 for controlling the secondary battery 35, and the BUC 33 performs information communication with an ECU 8 of the vehicle 1 which constitutes the electric power source. To be more specific, the BUC 33 transmits a charging electric power prediction value of the electric vehicle to the ECU 8. When the electric vehicle 32 is traveling, a motor 36 is driven by electric power stored in the secondary battery 35, and a driving force of the motor 36 is transmitted to tires 16 by way of a speed reduction gear 15.

A system block diagram showing the constitution of the ECU 8 according to the fifth embodiment of the present invention is substantially equal to the system block diagram shown in Fig. 3.

This embodiment of the present invention is characterized by performing a control of a cooling water temperature and an EGR gas amount based on information on prediction on an amount of electric power used with respect to an engine power generation control performed by the electric power supply system.

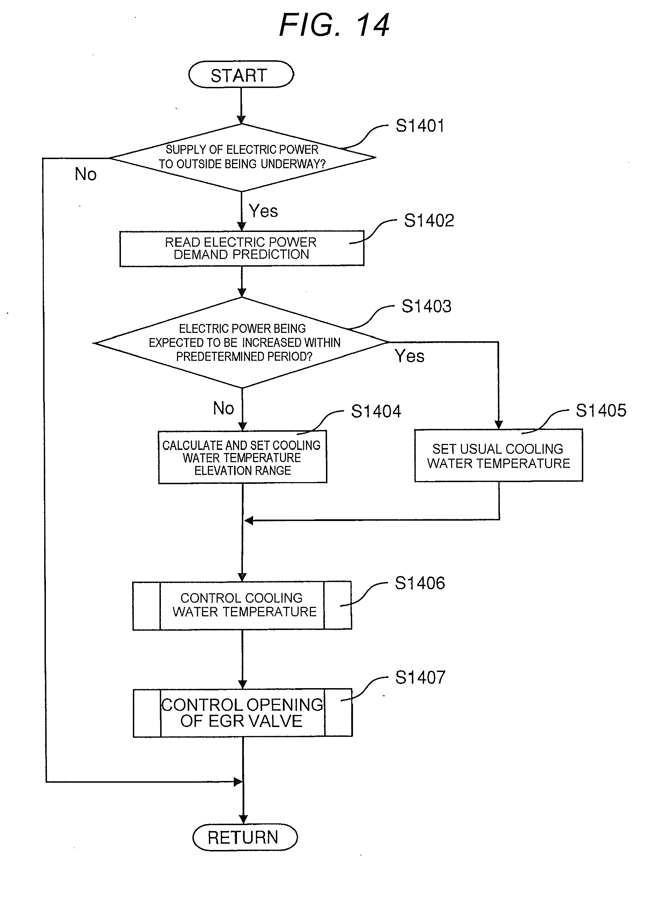

Fig. 14 is a flowchart of an engine cooling water temperature control and an EGR gas amount control performed by the electric power supply system according to the fifth embodiment of the present invention. The contents of a control shown in Fig. 14 are repeatedly executed by the ECU 8 at predetermined cycles.

In step S1401, the ECU 8 determines whether or not electric power is supplied to the outside based on a connection state of a power line or the like. When it is determined that the supply of electric power to the outside is underway, the processing advances to step S1402 where the ECU 8 reads a prediction value of an amount of electric power used which is transmitted from the BCU 33. Thereafter, the processing advances to step S1403 where the ECU 8 determines whether or not an amount of electric power used is expected to be increased exceeding a present amount within the fixed period as counted from the present time. When it is determined that the amount of electric power used is expected to be increased, the processing advances to step S1405 where the ECU 8 reflects a usual cooling water temperature set value and, thereafter, the processing advances to step S1406. Here, the usual cooling water temperature set value means a cooling water set temperature when the same engine torque or the same engine rotational speed is realized in a usual operation mode where a vehicle is used for traveling as this electric power usage mode, and the usual cooling water temperature set value is stored in a ROM 8d in the inside of the ECU 8 in advance. When it is determined that the amount of electric power used is not expected to be increased exceeding the present amount within the fixed period as counted from the present time in step S1403, the processing advances to step S1404 where the ECU 8 calculates a temperature elevation range from the usual cooling water temperature set value. The temperature elevation range is calculated based on a present engine output P and a limit cooling water temperature T_{OH} at which the engine is overheated. To be more specific, the temperature elevation range is calculated such that the cooling water temperature becomes maximum within a range where the engine is not overheated. After reflecting a calculation result on cooling water temperature setting, the processing advances to step S1406. In step S1406, the ECU 8 executes a temperature control such that the set cooling water temperature is obtained. The temperature control is realized by controlling a flow rate of cooling water supplied to the engine or by controlling an amount of cooling water which passes through a radiator. Thereafter, in step S1407, the ECU 8 executes an EGR valve opening control based on a present cooling water temperature. The relationship between the cooling water temperature and the opening of the EGR valve is stored in the ROM 8d in the inside of the ECU 8 in advance. The higher the cooling water temperature, the more easily the combustion stability can be secured also in a high EGR state and hence, an EGR gas amount is increased by increasing the opening of the EGR valve thus enhancing fuel economy.

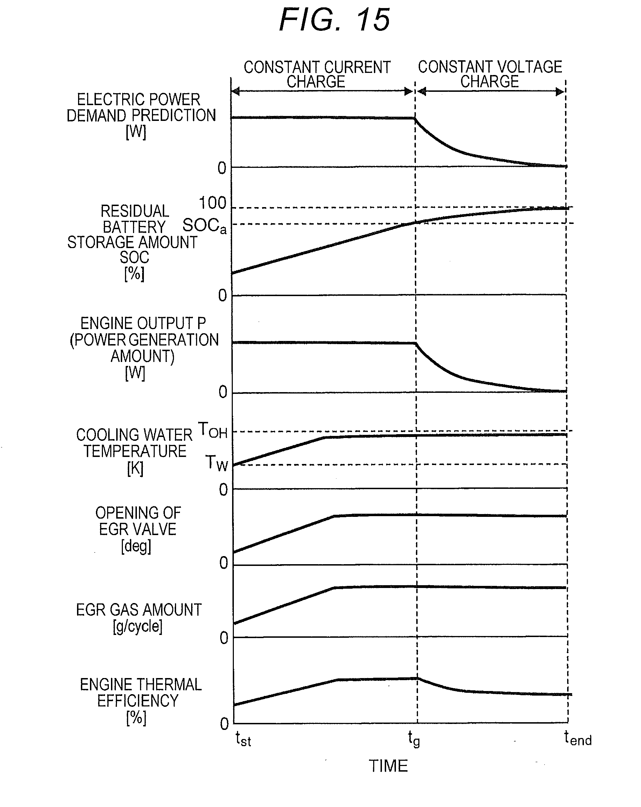

Fig. 15 is a timing chart of the cooling water temperature control and the EGR control in the electric power supply system according to the fifth embodiment of the present invention. In the drawing, from the top to the bottom, the electric power demand prediction, a battery residual storage amount SOC, an engine output P, a cooling water temperature, opening of an EGR valve, an EGR gas amount and engine thermal efficiency are described. The electric power demand prediction is information transmitted to the ECU 8 from the BUC 33. In charging a secondary battery, in general, adopted is a method where a constant current charge where the secondary battery is charged with electric power at a constant current amount is performed during a period from a charging start (tₛₜ) to a point of time (tg) at which the battery residual storage amount SOC becomes a specific battery residual storage amount SOCₐ and, during a period from the point of time (t_{g}) at which the battery residual storage amount SOC becomes the specific battery residual storage amount SOCₐ to a charging finish (t_{end}), the secondary battery is charged with electric power at a constant voltage until a target charge amount is obtained for avoiding an overcharge of the battery. Accordingly, unless disturbance such as the use of electric power during charging occurs, there is no possibility that an electric power demand is largely increased during a period from the charging start to the charging finish. During the charging period, it is necessary to change the engine output P corresponding to the electric power demand prediction. At a point of time of charging start (tₛₜ), it is determined that an electric power demand is not expected to be increased in future and hence, a cooling water temperature is set to a temperature higher than a usual temperature set value T_{w}. The set temperature at this point of time is set to a value lower than an engine overheating limit temperature T_{OH}. The usual temperature set value T_{w} means a cooling water set temperature when the same engine torque or the same engine rotational speed is realized in a usual mode where the vehicle is used for traveling as this electric power usage mode. After the cooling water temperature is set, a cooling water temperature control (flow rate control) is executed so that the cooling water temperature is gradually elevated. Here, along with the elevation of the cooling water temperature, the opening of the EGR valve is increased so that an EGR gas amount is increased. Accordingly, engine thermal efficiency can be enhanced due to a pumping loss reduction effect while suppressing the combustion instability caused by the increase in the EGR gas amount.

As has been explained above, according to this embodiment, by determining whether or not the engine is under the engine operation condition under which drawbacks do not occur when a cooling water temperature is elevated to a high temperature including a future prediction, while avoiding knocking or overheating caused by the elevation of the cooling water temperature to a high temperature, the EGR gas amount is increased thus enhancing thermal efficiency of the engine.

## Claims

1. An electric power supply system comprising a plurality of electric power sources and being configured to switch the electric power sources in supplying electric power corresponding to demanded electric power, wherein the electric power sources include the supply of electric power from a vehicle (1).

2. The electric power supply system according to claim 1, wherein a controlled variable of an engine (7) mounted on the vehicle (1) is decided based on information supplied from an external device electrically connected to the vehicle (1) in performing the supply of electric power from the vehicle (1).

3. The electric power supply system according to claim 2, wherein the information supplied from the external device includes either one of transition over time in an amount of electric power demand including future prediction and transition over time in an amount of electric power which is suppliable from other electric power sources including future prediction.

4. The electric power supply system according to claim 2, wherein the controlled variable of the engine (7) is an exhaust gas recirculation amount, and the engine (7) is controlled such that the exhaust gas recirculation amount in a case where the increase in the amount of electric power demand is expected within a fixed period as counted from a present time becomes larger than the exhaust gas recirculation amount in a case where the increase in the amount of electric power demand is not expected within a period from a present time to a time after the lapse of a fixed time.

5. The electric power supply system according to one of the preceding claims, wherein the electric power supply system includes a plurality of electric power usage modes, and switches, when an electric power demand exceeds a limit amount of suppliable electric power of the electric power source, the electric power usage modes corresponding to the limit amount of suppliable electric power.

6. The electric power supply system according to claim 5, wherein the electric power usage modes include an energy basic electric power mode where the electric power supply to the electric power supply system per se is assumed.

7. The electric power supply system according to claim 5, wherein the electric power usage modes include a local infrastructure electric power mode where the electric power supply connected to a local infrastructure is assumed.

8. The electric power supply system according to claim 5, wherein the electric power usage modes include a life environment improvement mode where the electric power supply leading to the life environment improvement is assumed.

9. The electric power supply system according to claim 5, wherein a maximum amount of electric power used in the mode is controlled in an ascending order of the energy basic electric power mode, the local infrastructure electric power mode, and the life environment improvement mode.

10. A controller of a vehicle capable of supplying electric power to the outside, wherein the vehicle (1) is used as one of electric power sources in an electric power supply system which includes a plurality of electric power sources and switches electric power sources in supplying electric power corresponding to demanded electric power.

11. The controller of a vehicle according to claim 10, wherein a controlled variable of an engine (7) mounted on the vehicle (1) is decided based on information supplied from an external device electrically connected to the vehicle (1).

12. The controller of a vehicle according to claim 11, wherein the information supplied from the external device includes either one of transition over time in an amount of electric power demand including future prediction and transition over time in an amount of electric power which is suppliable from other electric power sources including future prediction.

13. The controller of a vehicle according to claim 11, wherein the information communication between the vehicle (1) and the external device is performed using power line communications or a smartphone.

14. The controller of a vehicle according to claim 11, wherein the controlled variable of the engine (7) is an amount of electric power generated by the engine (7), and the amount of electric power generated by the engine (7) is controlled such that a change rate of the amount of electric power generated by the engine (7) becomes smaller than a change rate of the amount of electric power demand.

15. The controller of a vehicle according to claim 14, wherein one of the electric power sources is a secondary battery (6), and an amount of electric power generated by the engine (7) is decided corresponding to a cumulative value of an amount of electric power demand corresponding to a fixed period as counted from a present time and a storage amount of the secondary battery (6).

16. The controller of a vehicle according to claim 15, wherein when the amount of electric power generated by the engine (7) becomes equal to or below a lower limit of an engine output at which electric power can be generated with specified efficiency, the generation of electric power by the engine (7) is stopped.

17. The controller of a vehicle according to claim 11, wherein the controlled variable of the engine (7) is an exhaust gas recirculation amount, and the engine (7) is controlled such that the exhaust gas recirculation amount in a case where the increase in the amount of electric power demand is expected within a fixed period as counted from a present time becomes larger than the exhaust gas recirculation amount in a case where the increase in the amount of electric power demand is not expected within a fixed period as counted from a present time.

18. The controller of a vehicle according to claim 11, wherein the controlled variable of the engine (7) is a cooling water temperature, and the engine (7) is controlled such that the cooling water temperature in a case where the transition of the amount of electric power demand at a fixed value or less is expected within a fixed period as counted from a present time becomes higher than the cooling water temperature in a case where the transition of the amount of electric power demand at a fixed value or less is not expected within a fixed period as counted from a present time.

19. The controller of a vehicle according to claim 10, wherein electric power is generated using a household gas fuel instead of using a usual fuel such as gasoline or light oil as a fuel for the vehicle (1) in supplying electric power to the outside from the vehicle (1).

20. A controller of a vehicle capable of supplying electric power to the outside, wherein an amount of electric power generated by an engine (7) which is mounted on the vehicle (1) is decided based on time transition information on an amount of an electric power demand including the future prediction obtained from an external device which is electrically connected with the vehicle (1).
